# EUROPÄISCHE PATENTSCHRIFT

(11) **EP 0 793 577 B1**
(45) Veröffentlichungstag und Bekanntmachung des Hinweises auf die Patenterteilung: **13.09.2000**
(21) Anmeldenummer: 95935823.5
(22) Anmeldetag: 28.10.1995
(51) Int. Cl.: B32B 25/18, B32B 31/20, C04B 35/645

(54) **VERFAHREN ZUM HERSTELLEN EINER SCHICHTSTRUKTUR AUF EINEM SUBSTRAT**
PROCESS FOR PRODUCING A COATING STRUCTURE ON A SUBSTRATE
PROCEDE D'OBTENTION D'UNE STRUCTURE STRATIFIEE SUR UN SUBSTRAT

(30) Priorität: 22.11.1994 DE 4441487
(43) Veröffentlichungstag der Anmeldung: 10.09.1997
(73) Patentinhaber: ROBERT BOSCH GMBH, 70442 Stuttgart (DE)
(72) Erfinder: STEINLE, Klaus, D-71065 Sindelfingen (DE); STECHER, Günther, D-71229 Leonberg (DE); LÄTSCH, Annette, D-71277 Rutesheim (DE)
(86) Internationale Anmeldenummer: DE9501506
(87) Internationale Veröffentlichungsnummer: WO9615904

(56) Entgegenhaltungen:
- EP-A- 0 374 825
- EP-A- 0 503 854
- EP-A- 0 519 224
- WO-A-93/00713
- DE-C- 3 823 393
- US-A- 4 972 579

## Beschreibung

Die Erfindung betrifft ein Verfahren zum Herstellen einer Schichtstruktur auf einem wenigstens einlagigen Sustrat, wobei das Substrat im Bereich einer aufzubringenden Schicht wenigstens eine Aussparung aufweist, wobei die Schicht mit einer Hilfsschicht versehen und mit dieser gemeinsam auf das die wenigstens eine Aussparung aufweisende Substrat thermisch aufgebraucht (aufgebrannt) ist, wobei das Substrat, die Schicht und die Hilfsschicht gemeinsam unter Beaufschlagung mit einer Druckkraft (F) gebrannt und zusammengesintert (cofire-Prozeß) werden und wobei die Druckkraft (F) über eine Brennunterlage eingebracht wird, welche nach dem Aufbrennen ebenso wie die Hilfsschicht wieder entfernt wird.

### Stand der Technik

Verfahren zum Herstellen von Schichtstrukturen auf Substraten sind bekannt. Die Schichtstrukturen werden beispielsweise als Pasten oder sogenannte grüne Folien auf ein Substrat aufgebracht und mittels eines Brennvorgangs (Sintern) mit diesem verbunden. Die Schichtstrukturen können beispielsweise eine Glaskeramik sein, die mit Metallisierungen, Widerständen und/oder Isolationsschichten aktivierbar sind. Für bestimmte Bauelemente ist es notwendig, daß das Substrat, auf das die Schichtstruktur aufgebracht ist, Aussparungen aufweist, die von der Schichtstruktur überspannt werden. Hierdurch werden Membranstrukturen geschaffen, die beispielsweise beim Messen von Gasströmungen, als Druckmeßdosen oder als Beschleunigungssensoren Anwendung finden.

Beim Aufsintern der Schichtstruktur auf derartige Substrate können im Bereich der Aussparungen Risse auftreten, die eine Funktion der Schichtstruktur beeinträchtigen beziehungsweise verhindern. Aus der DE-OS 41 21 390.4 ist ein Verfahren zum Herstellen einer freitragenden Dichtschichtstruktur bekannt, bei dem gewölbte Strukturen geschaffen werden. Hierbei ist nachteilig, daß durch die Aufwölbungen, inbesondere beim Überspannen von größeren Aussparungen, innere Spannungen in der Schichtstruktur auftreten, die zu einem Brechen der aufgewölbten Schicht führen können.

Aus der WO-A-93/00713 ist ein Verfahren zum Herstellen einer freitragenden Dickschichtstruktur auf einem Substrat über einer Aussparung in diesem Substrat bekannt, wobei auf das Substrat eine Schicht aufgebracht und diese mit dem Substrat durch Brennen verbunden wird. Zur Herstellung der Schicht wird ein Hilfssubstrat verwendet und erst nach der Herstellung der aktiven Schicht das eigentliche Substrat mit dieser aktiven Schicht verbunden. Die Druckschrift enthält keine Angaben über die Art und die Höhe der Beaufschlagung der Schicht und der Hilfsschicht während des Brennens mit einer die Verbindung der Einzelschichten beeinflussenden Druckkraft.

Aus der EP-A-0 374 825 ist eine elektronische Mehrschichtanordnung bekannt, welche AlN und AlN-Prosylikatglas als Beschichtung auf dem AlN-Substrat aufweist. Hierbei werden die Schichten unter Druck zu einem dichten Laminat verbunden, wobei jedoch die einzelnen Schichten durchgehend sind und keine Aussparungen enthalten. Eine ähnliche Anordnung ist aus der EP-A-0 519 224 bekannt, welche eine in Heißpreßtechnik auf ein Substrat aufgebrachte Rahmenstruktur zeigt. Hierbei liegt die rahmenartige Struktur ganzflächig auf dem Substrat auf, Aussparungen werden nicht überspannt.

Die US-PS 4,972,579 beschreibt einen Drucksensor mit einer entsprechend dem vorhandenen Umgebungsdruck auslenkbaren keramischen Membran. Eine Hilfsschicht, inbesondere eine nach dem Aufbrennen wieder entfernte Hilfsschicht ist nicht vorgesehen. Aus der EP-A-0 503 854 ist ein Verfahren zum Entfernen einer Glasschicht von einem Sinterkörper beschrieben, welcher durch Heißpressen eines vorgeformten Körpers aus anorganischem Material bei einer hohen Temperatur über eine vorbestimmte Zeit hergestellt ist. Das Aufbringen einer Schicht über einem in der Schicht vorgesehenen Hohlraum unter zur Hilfenahme einer Hilfsschicht ist nicht beschrieben. Schließlich ist aus der DE-C-38 23 393 ein Verfahren zum Verdichten kompliziert geformter und poröser keramischer Bauteile durch heißisostatisches Pressen bekannt. Hierbei erfolgt vor dem heißisostatischen Pressen eine Kapselung der porösen keramischen Bauteile mittels eines Wachs- und Netzmittel enthaltenen Materials, wobei das verwendete Lösungsmittel und die organischen Bestandteile anschließend verdampft und die so erhaltenen keramischen Körper in einer Schutzgasatmosphäre gesintert werden. Die Kapselschicht wird anschließend mechanisch entfernt. Auch in dieser Druckschicht ist die spezielle Problematik bei der Herstellung einer Schichtstruktur über einer Aussparung nicht offenbart.

Der Erfindung liegt die Aufgabe zugrunde, ein Verfahren zum Herstellen einer Schichtstruktur auf einem wenigstens einlagigen Substrat anzugeben, welches im Bereich der aufzubringenden Schicht wenigstens eine Aussparung aufweist. Das Verfahren soll so ausgebildet sein, daß die die Aussparung überdeckende Schicht weitgehend spannungsfrei ist und somit frei bleibt von Rissen.

### Vorteile der Erfindung

Das erfindungsgemäße Verfahren gemäß Patentanspruch 1 ermöglicht die Herstellung von spannungs- und rissfreien Schichtstrukturen über Aussparungen von Substraten durch die Verwendung einer Hilfsschicht, welche gemeinsam mit der Schicht auf das Substrat aufgebracht (gesintert) und nach dem Aufbringen wieder entfernt wird. Die Schichtstruktur wird während des Sinterns mit einer Druckkraft beaufschlagt, so daß eine Verdichtung der Schicht in Richtung der Flächennormale stattfindet. Hierdurch werden Schwindungstoleranzen in der Ebene minimiert, so daß die beim Brennen (Sintern) auftretende Schwindung von etwa 15 bis 20 % der ursprünglichen Größe der Schichtstruktur im wesentlichen in der Flächennormale abgeleitet werden kann. Man erhält so eine ebene Schichtstruktur über den Aussparungen des Substrats, die selbst bei relativ großen Aussparungen spannungsfrei ist. Derartig spannungsfrei aufgehängte Membranen über Aussparungen in Substraten sind inbesondere für kapazitiv detektierende Sensoren einsetzbar, da eine Auslenkung der Membran ausschließlich von äußeren, auf diese einwirkenden Kräfte oder Beschleunigungen abhängig ist, und innere Spannungen innerhalb der Membran aufgrund ihres Nichtvorhandenseins vernachlässigbar sind. Derartige Membranen können weiterhin sehr vorteilhaft mit einer trägen Masse versehen werden, so daß eine von außen angreifende Beschleunigung eine Auslenkung der Membran bewirkt, die nicht durch innere Spannungen der Membran behindert wird.

Ferner ist vorteilhaft, wenn die Schichtstruktur aus mehreren einzelnen Teilschichten besteht, die gemeinsam unter Zwischenschaltung einer Hilfsschicht auf das Substrat aufgesintert werden. Hierdurch sind Mehrschichtaufbauten möglich, so daß gegebenenfalls unterschiedliche Funktionen gleichzeitig über einer Aussparung des Substrats realisierbar sind. Die Teilschichten werden während des Brennens zu einer spannungsfrei über der Aussparung angeordneten Membran geformt.

Darüber hinaus ist vorteilhaft, wenn auf das Substrat beidseitig über der wenigstens einen Aussparung jeweils eine Schichtstruktur aufgebracht wird. Hierdurch lassen sich Bauelemente schaffen, die innerhalb eines Substrats einen Hohlraum aufweisen, der beidseitig von einer spannungsfrei freitragend aufgehängten Membran begrenzt wird. Hierdurch lassen sich vorteilhaft kapazitiv detektierende Sensoren schaffen, die auf unterschiedliche Auslenkungen der über der Aussparung gegenüberliegend angeordneten Membran reagieren. Weiterhin kann sehr vorteilhaft jede der beiden, die Aussparungen überspannende Membran mit einer unterschiedlichen seismischen Masse versehen sein, so daß bei einer Beschleunigungseinwirkung auf das Substrat unterschiedliche Signale detektierbar sind.

Weitere vorteilhafte Ausgestaltungen der Erfindung ergeben sich aus den übrigen in den Unteransprüchen genannten Merkmalen.

### Zeichnung

Die Erfindung wird nachfolgend in Ausführungsbeispielen anhand der zugehörigen Zeichnungen näher erläutert. Es zeigen:
- Figur 1: eine schematische Schnittdarstellung durch eine Schichtstruktur vor dem Brennen und
- Figur 2: eine schematische Schnittdarstellung durch eine Schichtstruktur in einem anderen Ausführungsbeispiel nach dem Brennen.

### Beschreibung der Ausführungsbeispiele

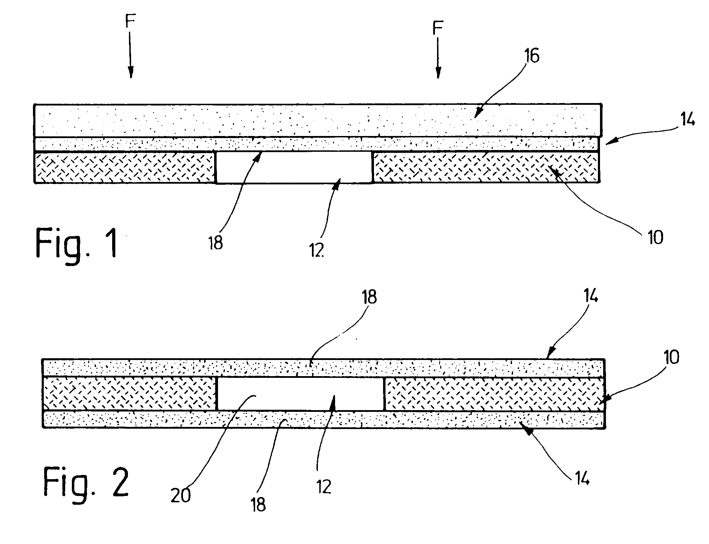

Figur 1 zeigt in einer schematischen Schnittdarstellung einen Teilbereich eines Substrats 10. Das Substrat 10 besteht beispielsweise aus einer glashaltigen oder glasfreien Keramik oder einem anderen zum Aufbau eines Dickschicht-Sensors geeigneten Materials. Das Substrat 10 kann ein- aber auch mehrlagig ausgebildet sein. Nach weiteren Ausführungsbeispielen kann das Substrat 10 grün, daß heißt, ungesintert, bei einem mehrlagigem Aufbau cofire-gesintert (zusammengesintert) oder vorgebrannt sein. Im Rahmen der Beschreibung soll auf die verschiedensten Ausgangszustände des Substrats 10 jedoch nicht näher eingegangen werden.

Das Substrat 10 besitzt eine Aussparung 12, die als Durchbruch ausgebildet ist. Die Aussparung 12 kann beispielsweise einen runden, eckigen oder andersartig geformten Querschnitt besitzen. Nach einem weiteren, nicht dargestellten Ausführungsbeispiel kann das Substrat 10 auch mehrere, nebeneinander angeordnete Aussparungen 12 aufweisen. Über dem Substrat ist eine Schicht 14 angeordnet, die beispielsweise von einer glaskeramischen Folie gebildet wird. Die Schicht 14 liegt als sogenannte grüne Folie vor, die erst durch einen noch zu erläuternden Brennprozeß ihre endgültige Gestaltung erfährt. Die auf dem Substrat 10 aufliegende Schicht 14 überspannt hierbei die Aussparung 12 vollkommen. Auf der dem Substrat 10 abgewandten Seite der Schicht 14 ist ein Hilfstape 16 (Hilfsschicht) angeordnet. Das Hilfstape 16 und die Schicht 14 sind vor dem Aufbringen auf das Substrat 10 miteinander verpreßt worden.

Zum Herstellen der Schichtstruktur wird der aus dem Substrat 10, der Schicht 14 sowie dem Hilfstape 16 bestehende Aufbau zwischen zwei ebenen, temperaturfesten Brennunterlagen angeordnet (in der Figur nicht dargestellt). Die Brennunterlagen werden mit einer hier angedeuteten Druckkraft F beaufschlagt, so daß ein Brennen der Schichtstruktur bei hohen Temperaturen und unter Druck erfolgt. Die Druckkraft kann beispielsweise durch ein auf die obere Brennunterlage aufgelegtes Gewicht oder einen externen Stempel aufgebracht werden. Eine Höhe der Druckkraft F kann hierbei beispielsweise als Funktion einer Temperatur und/oder einer Zeitdauer des Brennprozesses ermittelt und eingestellt werden. Die Druckkraft beträgt zum Beispiel bei einer angenommenen Schichtdicke der Schicht 14 von beispielsweise 0,1 mm 1,5 bar. Die Druckkraft F wird während des gesamten Brennprozesses aufrechterhalten. Über den Hilfstape 16 erfolgt eine Verteilung der Druckkraft flächig auf die Schicht 14 beziehungsweise das Substrat 10. Durch die gleichmäßige Beaufschlagung mit der Druckkraft F wird eine laterale Schwindung der Schicht 14 während des Sinterns vermieden. Die notwendigerweise auftretende Schwindung der Schicht 14 wird im wesentlichen ausschließlich in die Flächennormale abgeleitet. Nach Beendigung des Sinterprozesses wird die Beaufschlagung mit der Druckkraft F beendet, die Schichtstruktur zwischen den Brennunterlage herausgenommen und das Hilfstape 16 entfernt. Im Ergebnis des Brennprozesses entsteht ein Substrat 10, dessen Aussparung 12 von der Schicht 14 überspannt ist, wobei im Bereich der Aussparung 12 eine vollkommen ebene, rißfreie Membran 18 entstanden ist.

Anstelle eines einlagigen Aufbaus der Schicht 14 kann diese auch ein Aufbau aus mehreren Teilschichten besitzen, die gemeinsam dann die Schicht 14 ergeben. Die Teilschichten werden übereinander als grüne Folien auf das Substrat 10 aufgebracht, wobei die äußere, dem Substrat 10 abgewandte Teilschicht mit dem Hilfstape 16 verpreßt ist. Die Teilschichten können nach verschiedenen Ausführungsbeispielen bereits alle gemeinsam oder in Teilschritten miteinander verpreßt sein. Der Brennprozeß wird in vollkommen analoger Weise durchgeführt, wobei eine Abhängigkeit zwischen der Druckkraft F und der Schichtdicke der Schicht 14 besteht. Je größer die Schichtdicke der Schicht 14 ist, je höher ist die Druckkraft F zu wählen. So lassen sich Sensorelemente mit einer besonders dicken, rißfrei und freitragend über eine Aussparung 12 aufgehängte Membran 18 erzeugen.

In der Figur 2 ist in einem weiteren Ausführungsbeispiel eine Schichtstruktur gezeigt, wobei gleiche Teile wie in Figur 1 mit gleichen Bezugszeichen versehen und nicht nochmals erläutert sind. Bei der hier gezeigten Schichtstruktur sind beidseitig des Substrats 10 jeweils eine Schicht 14 angeordnet. Die Schichten 14 werden entsprechend dem bereits erläuterten Verfahren mit dem Substrat 10 versintert. Vor dem Versintern war jede der Schichten 14 mit einem Hilfstape 16 versehen. Dieser Schichtaufbau ist wiederum zwischen ebenen, temperaturfesten Brennunterlagen angeordnet gewesen, wobei sich zwischen den Brennunterlagen ein Schichtaufbau aus einem Hilfstape 16, einer Schicht 14, dem Substrat 10, einer nächsten Schicht 14 und einem nächsten Hilfstape 16 ergibt. Während des Versinterns wird diese Struktur wiederum mit der Druckkraft F beaufschlagt, wobei diese aufgrund der zwei vorgesehenen Schichten 14 entsprechend größer gewählt ist. Nach dem Sinterprozeß entsteht das in Figur 2 gezeigte Gebilde, wobei die Aussparung 12 des Substrats 10 nunmehr einen Hohlraum 20 ergibt, der sich zwischen den Membranen 18 der beidseitig des Substrats 10 angeordneten Schichten 14 befindet. Hiermit ist ein besonders vielseitig einsetzbares, zwei rißfrei freitragend aufgehängte Membranen 18 aufweisendes Sensorelement erzielt. Jede der Schichten 14 kann wiederum aus einer Anzahl von Teilschichten bestehen.

Im Rahmen der Beschreibung der Ausführungsbeispiele wurde auf die Aktivierung der Schichten 14, beispielsweise durch Aufbringen von Metallisierungen, Isolationsschichten, seismischen Massen und ähnliches verzichtet, da dies nicht Gegenstand des erfindungsgemäßen Verfahrens ist.

## Patentansprüche

1. Verfahren zum Herstellen einer Schichtstruktur auf einem wenigstens einlagigen Substrat (10), wobei das Substrat (10) im Bereich einer aufzubringenden Schicht (14) wenigstens eine Aussparung (12) aufweist, wobei die Schicht mit einer Hilfsschicht (16) versehen und mit dieser gemeinsam auf das die wenigstens eine Aussparung (12) aufweisende Substrat (10) thermisch aufgebracht (aufgebrannt) ist, wobei das Substrat (10), die Schicht (14) und die Hilfsschicht (16) gemeinsam unter Beaufschlagung mit einer Druckkraft (F) gebrannt und zusammengesintert (cofire-Prozeß) werden und wobei die Druckkraft (F) über eine Brennunterlage eingebracht wird, welche nach dem Aufbrennen ebenso wie die Hilfsschicht (16) wieder entfernt wird.

2. Verfahren nach Anspruch 1, dadurch gekennzeichnet, daß die Hilfsschicht (16) und die Schicht (14) vor dem Aufbrennen auf das Substrat (10) miteinander verpreßt werden.

3. Verfahren nach Anspruch 1, dadurch gekennzeichnet, daß die Druckkraft (F) während der gesamten Zeitdauer des Brennens aufrechterhalten wird.

4. Verfahren nach einem der vorhergehenden Ansprüche, dadurch gekennzeichnet, daß die Druckkraft (F) als eine Funktion der Temperatur und/oder der Zeitdauer des Brennens ermittelt und eingestellt wird.

5. Verfahren nach einem der vorhergehenden Ansprüche, dadurch gekennzeichnet, daß die Druckkraft (F) in Abhängigkeit von der Dicke der Schicht (14) eingestellt wird.

6. Verfahren nach einem der vorhergehenden Ansprüche, dadurch gekennzeichnet, daß die Schicht (14) aus mehreren einzelnen Teilschichten besteht, die gemeinsam mit dem Substrat (10) unter Beaufschlagung mit einer Druckkraft (F) gesintert (cofire-Prozeß) werden.

7. Verfahren nach Anspruch 6, dadurch gekennzeichnet, daß die Teilschichten vor dem Zusammensintern mit dem Substrat (10) alle gemeinsam oder in Teilschritten verpreßt werden.

## Claims

1. Process for producing a layer structure on a substrate (10) comprising at least one layer, the substrate (10) having at least one cut-out (12) in the area of a layer (14) which is to be applied, the layer being provided with an auxiliary layer (16) and being thermally applied (fired) onto the substrate (10), which has the at least one cut-out (12), together with the auxiliary layer, the substrate (10), the layer (14) and the auxiliary layer (16) being fired jointly, with a compressive force (F) applied, and sintered together (cofire process), and the compressive force (F) being introduced via a firing base which is removed again, as is the auxiliary layer (16), after firing.

2. Process according to Claim 1, characterized in that the auxiliary layer (16) and the layer (14) are pressed together before being fired onto the substrate (10) .

3. Process according to Claim 1, characterized in that the compressive force (F) is maintained throughout the entire duration of firing.

4. Process according to one of the preceding claims, characterized in that the compressive force (F) is determined and set as a function of the temperature and/or the duration of firing.

5. Process according to one of the preceding claims, characterized in that the compressive force (F) is set as a function of the thickness of the layer (14).

6. Process according to one of the preceding claims, characterized in that the layer (14) consists of a plurality of partial layers which are sintered jointly with the substrate (10) (cofire process) while a compressive force (F) is being applied.

7. Process according to Claim 6, characterized in that the partial layers, before being sintered together, are pressed to the substrate (10) all at the same time or in partial steps.

## Revendications

1. Procédé de fabrication d'une structure stratifiée sur au moins un substrat (10) à une couche,
- le substrat (10) ayant au moins une cavité (12) au niveau d'une couche (14) à appliquer,
- on munit la couche d'une couche auxiliaire (16) et on l'applique thermiquement (cuisson) en commun sur le substrat (10) ayant au moins une cavité (12),
- le substrat (10), la couche (14) et la couche auxiliaire (16) étant cuits en commun sous application d'une force de compression (F) pour être frittés en commun (procédé de cuisson commune),
- la force de compression (F) étant induite par l'intermédiaire d'un support de cuisson que l'on enlève de nouveau après la cuisson de même que la couche auxiliaire (16) .

2. Procédé selon la revendication 1,
caractérisé en ce que
la couche auxiliaire (16) et la couche (14) sont pressées l'une contre l'autre avant la cuisson sur le substrat (10).

3. Procédé selon la revendication 1,
caractérisé en ce que
la force de compression (F) est maintenue pendant toute la durée de la cuisson.

4. Procédé selon l'une quelconque des revendications 1 à 3,
caractérisé en ce que
la force de compression (F) s'obtient et se règle en fonction de la température et/ou de la durée de la cuisson.

5. Procédé selon l'une quelconque des revendications précédentes,
caractérisé en ce que
la force de compression (F) est réglée en fonction de l'épaisseur de la couche (14).

6. Procédé selon l'une quelconque des revendications précédentes,
caractérisé en ce que
la couche (14) est formée de plusieurs couches partielles qui sont frittées en commun avec le substrat (10) sous l'application d'une force de compression (F) (procédé de cuisson combinée).

7. Procédé selon la revendication 6,
caractérisé en ce qu'
on comprime les couches partielles avant le frittage combiné au substrat (10), en commun ou dans des étapes partielles.
